# EUROPEAN PATENT SPECIFICATION

(11) **EP 2 300 213 B1**
(45) Date of publication and mention of the grant of the patent: **11.07.2012**
(21) Application number: 09746103.2
(22) Date of filing: 13.05.2009
(51) Int. Cl.: B29C 51/16, B29C 51/10, B65D 5/56, B29C 51/42

(54) **A method for producing food packaging and such a food packaging**
Verfahren zur Herstellung einer Lebensmittelverpackung und eine solche Lebensmittelverpackung
Procédé de fabrication d'emballages d'aliments ainsi qu'un tel emballage

(30) Priority: 13.05.2008 GB 0808604
(43) Date of publication of application: 30.03.2011
(73) Proprietor: Split-It Limited, Bardon Leicestershire LE67 1PE (GB); Mecaplastic SAS, 85700 Pouzauges (FR)
(72) Inventor: TYE, Paul, Leicestershire LE67 1PE (GB); STEPNEY, Mark, Warwickshire CV11 6GY (GB)
(74) Representative: Newell, William Joseph
(86) International application number: PCT/GB2009/050506
(87) International publication number: WO 2009/138786

(56) References cited:
- WO-A1-03/041945
- DE-A1- 10 022 552
- US-A- 4 325 905

## Description

This invention relates to food packaging, in particular, but not exclusively for; ready meals and the like which are heatable in a microwave or conventional oven; and other packaging which is moisture resistant.

Packaging for meals has been produced using a C-PET tray sealed with a film. Once heated the C-PET is not recyclable as a plastic. Food information, images etc are printed on a cardboard sleeve and so this adds to the amount of packaging used.

It is known to form a food tray from blanks of cardboard precoated with polyethylene, folding the blank and gluing the edges. However, the polyethylene cannot easily be separated from the backing board because it is firmly adhered to the board so that the subsequent, cutting, folding and gluing steps can be accomplished without separation of the polyethylene form the cardboard. Also, air gaps at the joints of the tray are a problem with this technique.

Other packaging is produced by forming a cardboard tray and inserting a preformed liner into the tray. The preformed liner is glued to the tray. Since the tray and liner have to be manoeuvred or transported separately, each has to be at least strong enough to be self-supporting. Thus a relatively thick liner has to be produced, which adds to the amount of packaging used. The extra steps used to produce two components and their assembly also adds to manufacturing cost of such a tray. US4325905 discloses a cup and plastic liner.

Embodiments of the invention address one or more of the problems mentioned above.

According to the invention there is provided a method of producing food packaging, said method comprising the steps, in any suitable order, of:
i) providing a cardboard tray which includes a base and side walls which together form a recess having an inner surface;
ii) providing a plastics film adjacent the tray;
iii) heating said film at least to a temperature which allows said film to adhere to said inner surface;
iv) deforming said plastics, either after or during said heating in a direction away from said tray;
v) initially forcing, by means of gas pressure or vacuum, said film when so deformed and so heated, into contact with said inner surface to cause said adherence.
vi) further heating said film, after step v) and,
vii) further forcing said film in the same direction as the said initial forcing, following step vi).

The method may further include the repeating of steps vi) and vii).

In an embodiment said deforming is carried out by an initial gas pressure or an initial vacuum.

In an embodiment, said deforming comprises deforming said film into a domed shape, and said initial forcing includes inverting said domed shape.

Preferably said gas pressure and/or said initial gas pressure is air pressure.

In an embodiment the tray is formed from a blank including overlappable tabs.

Preferably the tabs are overlapped glued together to form the tray and may be glued together.

Preferably said method includes the step of providing a heater plate or plug which may be of a shape similar to or the same as the recess.

In an embodiment, the heater plate or plug is heated to perform the step of heating.

Conveniently the tray is supported in a female support and the female support and heater plate are brought together prior to the step of forcing said film into contact with the inner surface.

In an embodiment, said film is of a thickness of 30 to 450 microns in thickness, and preferably 30 to 150 microns, and more preferably 30 to 100 microns.

Alternatively or additionally, said vacuum is created between said inner surface and a surface of the film nearest said inner surface.

The invention extends to a food packaging according to Claim 12.

One embodiment only is described below, by way of example, with the aid of the drawings, wherein:
Figure 1 shows apparatus for continuously producing food trays; and
Figure 2 shows a food tray manufactured by the apparatus shown in Figure 1.

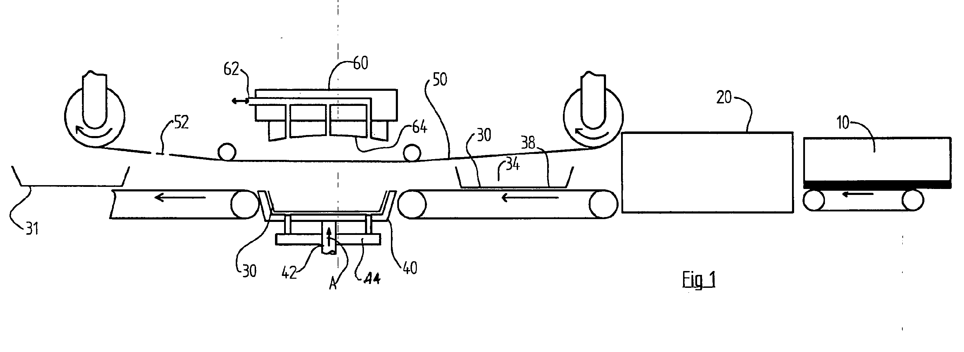

Referring to Figure 1 there is shown a stack of cardboard blanks 10 which are fed to a mechanism 20, shown schematically. The mechanism 20 folds and glues their edges to form unlined trays 30. Herein, the term 'tray' covers open containers, and need not be limited to tray-like containers which have a height less than there width, or to any particular shape. For example the term tray could include a deep sandwich pack, or a cylindrical shape, as well as a conventional shallow tray-like shape. In this instance, conventional shaped trays 30 have a recess 34 which includes an inner surface 38. The trays 30 are fed into a lower die 40 together with a reel fed sheet of PET plastics film 50 above the tray 30, of a thickness between approximately 30 and 150 microns.

An upper die 60 has a heater plate surface 64 having a PTFE coating, for example a Teflon ® coating. Lower die 40 is raised in the direction of arrow A toward the upper die 60 by means of a pneumatic ram 42. An initial vacuum is applied to ducts 62 which draw the film 50 toward the upper die 60. The upper die is heated to a temperature of approximately 110 to 200 degrees Celsius. At this temperature the plastics film softens and forms a domed shape (not illustrated) under the influence of the initial vacuum. Instead of, or as well as, an initial vacuum, air pressure under the film can be employed with equal effect.

As the film 50 is domed, its temperature increases such that it becomes tacky. The plastics film 50, now deformed into a domed shape, away from the lower die, under the influence of heat and the initial vacuum, is forced against the inner surface 38 of the recess 34 of tray 30 by means of air pressure either, now applied to the ducts 62, and/or by means of a further vacuum applied from the tray side of the film. This pressure or further vacuum causes the dome shape to invert and the now tacky and stretched film 50 to adhere smoothly to the inner surface 38 of the tray 30 supported on the lower die 40. The PTFE coated surface 64 aids the release of the now tacky film 50, should the film 50 make contact with the surface 64.

The excess film 50 is cut form the edges of the now lined tray 31 by known means to leave an unused film portion 52 with tray sized apertures.

The lower die 40 is lowered by reversing the direction of the ram 42. Product support plate 44 forces the lined tray from the supporting lower die 40 as the ram is lowered further than the position shown in the drawing. The finished, now lined tray 31 is then carried away.

The above mentioned process is repeated to allow substantially continuous production of the lined trays 31.

Since the above mentioned process can be employed in a variety of products and using different materials, it may be necessary to repeat the steps of heating the film and it may be necessary to then further force the film against the tray using air pressure or a vacuum. In particular, where thicker sheets of lining film are used and good quality cardboard is used for the trays, one or more repeats of the heating and forcing steps may be required in order for the film to stick to the cardboard tray effectively.

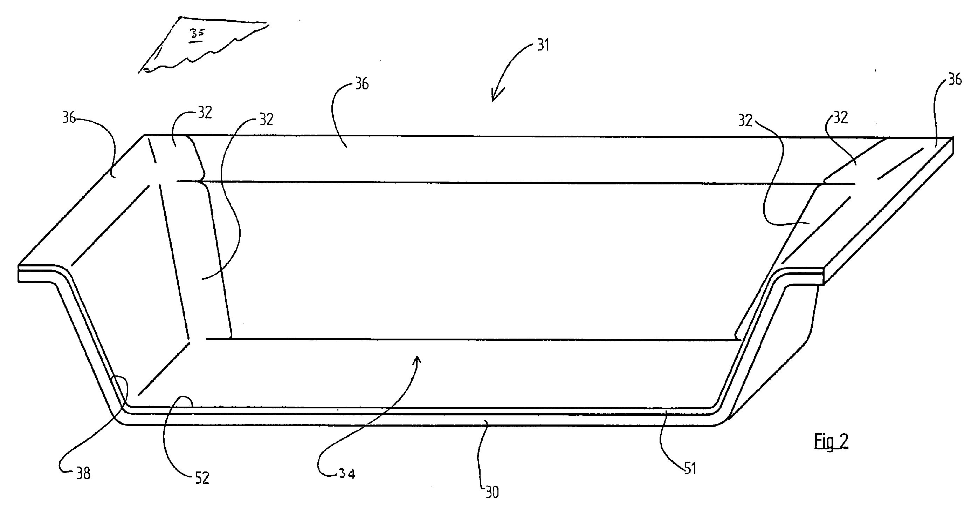

Figure 2 shows a lined tray 31 cut in half, formed by the process described above. The tray 31 includes the outer cardboard layer 30 which is cut from flat sheet, folded and glued at tabs 32 to form a self-supporting tray having the recess 34. Here, the term cardboard, is intended to encompass all natural fibre materials, for example wood pulp, plant fibres etc formed onto a sheet material or a post formed material such as corrugated board. The outer layer 30 supports the plastics film 51 which is now adhered by means of heat to the outer layer 30. The plastics film has a food contacting surface 52. The tray includes a lip 36 to which may be applied a further film lid 35(partially shown) for sealing the tray when food is contained in the recess 34. The lid 35 is readily hermetically sealable to the lip 36 and a inert or food modifying gas can be used to fill the recess 34 prior to sealing the lid 35 to the lip 36.

The manufacturing process described above produces a readily sealable tray which is made mainly from readily recyclable materials e.g. cardboard. If required, the cardboard is readily removable from the plastics film because the degree of adherence between the cardboard and plastics is controllable to give just enough adherence to perform a cooking function, but not too much to make impossible the separation of the cardboard from the film. Using the parameters mentioned above, it has been found that the tray 30 and film 51 are separable following heating of food in the tray, such that the two peel apart, leaving no more than 5% of the thickness of the material of the tray stuck to the film 50. The cardboard tray can then be recycled, and the film can be more easily recycled if desired because it is not too contaminated with cardboard.

Advantageously, the use of a heater plate to heat the plastics film prior to its application onto the unlined cardboard tray 30 provides control of the temperature of the film 51 and thus the strength of its adherence to the tray 30. The use of a heater plate also allows differential heating, so for example the film 51 could be heated to a higher temperature in the lip 36 area which in turn causes the film 51 to adhere more strongly to the lip 36 than to the remainder of the tray 30 so that a further tray- sealing film applied to the film 51 around the lip has a more secure anchor to the tray 30. Since no moulding is used, a thinner plastics film can be employed, which can reduce the non-recyclable material content of the tray.

One embodiment only has been described above, but it will be understood that modifications, variants, alternatives etc are possible within the ambit of the invention. For example, a process for producing one tray at a time has been shown, but production of multiple trays at one time is possible by increasing the quantity of apparatus described above, and running such apparatus in parallel and or series.

Although a continuous process for forming lined trays 31 from a stack 10 of cardboard blanks has been described above and illustrated, it is envisaged that the blanks could be produced as part of the process described, for example from a reel of cardboard. Food packaging plants could line the supplied trays just before filing and sealing them to minimise the risk of contaminating the plastic lining 51, thus advantageously, food filling and sealing could be included in the process described above. Alternatively, it is also possible also that lining of tray 30 could be carried out remotely to a food processing plant and trays 31 supplied ready lined. Although the blanks can have tabs which are glued togther prior to the lining process, it is possible to hold the unglued trays in the lower die 40 and use the film 51 to hold the tray together, omitting the glue. This technique is desirable for oven applications where the glue would, if used, melt.

A PET plastics film has been described above, although it will be understood that other plastics films could be used, for example polyester based polymers could be used. Also a polyethylene could be used and is favoured for food packaging which is not heated, for example sandwich packs. It can be seen that the invention provides food packaging having a composite construction of a plastics inner food-contacting layer 51, bonded to an outer recyclable layer 30, the inner and outer layers being separable after use, such that no more than 5% of the thickness of the outer layer is disposed on the inner layer.

## Claims

1. A method for producing food packaging (31), said method comprising the steps, in any suitable order, of:
i) providing a cardboard tray (30) which includes a base and side walls which together form a recess (34) having an inner surface (38);
ii) providing a plastics film (50) adjacent the tray;
iii) heating said film at least to a temperature which allows said film to adhere to said inner surface;
iv) deforming said plastics, either after or during said heating in a direction away from said tray;
v) initially forcing, by means of gas pressure or vacuum, said film when so deformed and so heated, into contact with said inner surface to cause said adherence; **characterised in that** the method further includes steps of:
vi) further heating said film, after step v); and
vii) further forcing said film in the same direction as the said initial forcing, following step vi).

2. A method according to claim 1 further including the repeating of step vi) and optionally vii)

3. A method according to claim 1 or 2, wherein said deforming is carried out by an initial gas pressure or an initial vacuum.

4. A method according to any one of the claims 1 to 3, wherein said deforming comprises deforming said film into a domed shape, and said initial forcing includes inverting said domed shape.

5. A method according to any one of the preceding claims, wherein said gas pressure and/or said initial gas pressure is air pressure.

6. A method according to any one of the preceding claims, wherein said tray is formed from a blank (10) including overlappable tabs.

7. A method according to any one of the preceding claims, wherein the method further includes the step of providing a heater plate or plug which may be of a shape similar to or the same as the recess.

8. A method according to claim 7, wherein the heater plate or plug is heated to perform the step of heating.

9. A method according to any one of the preceding claims, wherein the tray is supported in a female support (40) and the female support and heater plate are brought toward each other prior to the step of forcing said film into contact with the inner surface.

10. A method according to any one of the preceding claims, wherein, said film has a thickness of 30 to 450 microns, and preferably 30 to 150 microns, and more preferably 30 to 100 microns.

11. A method according to any one of the preceding claims, wherein, said vacuum is created between said inner surface and a surface of the film nearest said inner surface.

12. A food packaging (31) comprising a pre-formed cardboard tray having a recess (34) for holding a food product and a plastics layer (50) adhered to an inner surface of the cardboard tray, to form a food contacting surface, wherein the layer (50) is formed from a sheet of plastics material heated to at least a temperature that allows deformation of the sheet to a sufficient degree to allow the sheet to follow the shape of the inner surface of the tray and to allow bonding between said inner surface and said sheet, and said sheet and said inner surface are brought into contact to cause bonding of the sheet to said inner surface, the sheet plastics layer being initially deformed in a direction away from said inner surface of said tray before said contact, the packaging being **characterised in that** the sheet is heated again and further forced into contact with the tray after said heating.

13. Food packaging according to claim 12 wherein said plastics layer has a peripheral dimension greater than the tray, and the excess plastics is cut to the approximate dimensions of the tray following said bonding.

14. Food packaging according to any one of claims 12 to 13, wherein the plastics layer is a polyethylene, polyester, PET material, or other thermoplastics material, or a bioplastic, such as a vegetable oil or starch based plastics.

15. Food packaging according to any one of claims 12 to 14 further including a lid formed over the tray and hermetically sealed thereto, optionally including an air replacing gas introduced into a space formed by the packaging and said lid, prior to said sealing.

## Patentansprüche

1. Verfahren zur Herstellung von Lebensmittelverpackungen (31), umfassend die folgenden Schritte in einer beliebigen Reihenfolge:
i) Herstellen einer Pappschale (30) mit einem Boden und Seitenwänden, die zusammen eine Vertiefung (34) mit einer inneren Oberfläche (38) bilden;
ii) Bereitstellen einer Kunststofffolie (50) neben der Schale;
iii) Erwärmen der Folie auf wenigstens eine Temperatur, die es ermöglicht, daß die Folie an der inneren Oberfläche haftet;
iv) Verformen der Kunststoffe nach oder während der Erwärmung in einer Richtung von der Schale weg;
v) anfängliches Unterdrucksetzen der so verformten und erwärmten Folie mit Hilfe von Gasdruck oder Unterdruck, so daß diese mit der inneren Oberfläche in Berührung kommt, um das Anhaften zu bewirken,
**dadurch gekennzeichnet, daß** das Verfahren des weiteren die folgenden Schritte aufweist:
vi) weiteres Erwärmen oder Erhitzen der Folie nach dem Schritt v); und
vii) weiteres Drücken der Folie in derselben Richtung wie das anfängliche Drücken, und zwar auf den Schritt vi) folgend.

2. Verfahren nach Anspruch 1, **dadurch gekennzeichnet, daß** der Schritt vi) und wahlweise der Schritt vii) wiederholt werden.

3. Verfahren nach Anspruch 1 oder 2, **dadurch gekennzeichnet, daß** die Verformung durch einen anfänglichen Gasdruck oder einen anfänglichen Unterdruck ausgeführt wird.

4. Verfahren nach einem der Ansprüche 1 bis 3, **dadurch gekennzeichnet, daß** die Verformung das Verformen der Folie zu einer Haubenform beinhaltet und daß die anfängliche Druckbeaufschlagung das Umstülpen der Haubenform beinhaltet.

5. Verfahren nach einem der vorhergehenden Ansprüche, **dadurch gekennzeichnet, daß** der Gasdruck und / oder anfängliche Gasdruck Luftdruck ist.

6. Verfahren nach einem der vorhergehenden Ansprüche, **dadurch gekennzeichnet, daß** die Schale aus einem Rohling (10) einschließlich überlappbarer Nasen geformt wird.

7. Verfahren nach einem der vorhergehenden Ansprüche, **dadurch gekennzeichnet, daß** das Verfahren ferner den Schritt der Schaffung einer Heizplatte oder eines Heizklotzes umfaßt, die eine Form aufweisen, welche ähnlich oder gleich der Vertiefung ist.

8. Verfahren nach Anspruch 7, **dadurch gekennzeichnet, daß** die Heizplatte oder der Heizklotz erhitzt wird, um den Schritt der Erwärmung auszuführen.

9. Verfahren nach einem der vorhergehenden Ansprüche, **dadurch gekennzeichnet, daß** die Schale in einem Matrizenträger (40) getragen wird und daß der Matrizenträger und die Heizplatte zusammengebracht werden, bevor der Schritt folgt, in dem die Folie mit der inneren Oberfläche unter Druck in Berührung kommt.

10. Verfahren nach einem der vorhergehenden Ansprüche, **dadurch gekennzeichnet, daß** die Folie eine Dicke von 30 bis 450 µm und vorzugsweise 30 bis 150 µm und besonders bevorzugt zwischen 30 und 100 µm aufweist.

11. Verfahren nach einem der vorhergehenden Ansprüche, **dadurch gekennzeichnet, daß** der Unterdruck zwischen der inneren Oberfläche und einer Oberfläche der Folie erzeugt wird, die der inneren Oberfläche am nächsten liegt.

12. Lebensmittel-Verpackung (31), umfassend eine vorgeformte Pappschale mit einer Vertiefung (34) zur Aufnahme eines Lebensmittelproduktes und eine Plastikfolie (50), die an der inneren Oberfläche der Pappschale anhaftet, um eine Lebensmittel-Kontaktoberfläche zu bilden, wobei die Folie (50) aus einem Kunststoffmaterialbogen geformt ist, der auf wenigstens eine Temperatur erwärmt wird, die eine Verformung des Bogens in einem ausreichenden Maße ermöglicht, so daß der Bogen die Form der inneren Oberfläche der Schale annehmen kann und eine Verbindung zwischen der inneren Oberfläche und dem Bogen ermöglicht wird, und wobei dieser Bogen und die genannte innere Oberfläche in Berührung gebracht werden, um die Verbindung des Bogens mit der inneren Oberfläche zu bewirken, wobei des weiteren der Kunststoffschichtbogen anfänglich in eine Richtung von der inneren Oberfläche der Schale weg verformt wird, bevor die genannte Berührung stattfindet, verformt wird, **dadurch gekennzeichnet, daß** die Verpackung **dadurch gekennzeichnet ist, daß** der Bogen wiedererwärmt wird und nach der Erwärmung weiter mit der Schale unter Druckeinwirkung in Berührung bleibt.

13. Lebensmittel-Verpackung nach Anspruch 12, **dadurch gekennzeichnet, daß** die Kuriststofffolie eine Umfangsabmessung hat, die größer als die Schale ist, und daß der überschüssige Kunststoff auf annähernd die Abmessungen der Schale abgeschnitten wird, sobald die Verbindung erfolgt ist.

14. Lebensmittel-Verpackung nach Anspruch 12 oder 13, **dadurch gekennzeichnet, daß** die Kunststofffolie Polyethylen, Polyester, PET-Material oder ein bioplastisches Material ist, beispielsweise Pflanzenöl oder ein auf Stärke basierender Kunststoff ist.

15. Lebensmittel-Verpackung nach einem der Ansprüche 12 bis 14, **gekennzeichnet durch** einen Deckel, der über der Schale ausgebildet und hermetisch mit ihr abgedichtet ist, wobei wunschgemäß ein Gas, das die Luft ersetzt, in einen Raum eingeleitet wird, der von der Verpackung und dem Deckel gebildet wird, bevor die Abdichtung erfolgt.

## Revendications

1. - Procédé de fabrication d'emballages alimentaires (31), ledit procédé comprenant les étapes, dans un quelconque ordre approprié, consistant à :
i) disposer une barquette en carton (30) qui comprend une base et des parois latérales qui forment ensemble un renfoncement (34) ayant une surface interne (38) ;
ii) disposer un film de matière plastique (50) adjacent à la barquette ;
iii) chauffer ledit film au moins jusqu'à une température qui permet audit film d'adhérer à ladite surface interne ;
iv) déformer ladite matière plastique, soit après, soit durant ledit chauffage, dans une direction à l'opposée de ladite barquette ;
v) au moyen d'une pression de gaz ou d'un vide, forcer initialement ledit film, lorsqu'il est ainsi déformé et ainsi chauffé, à venir en contact avec ladite surface interne pour provoquer ladite adhérence ; **caractérisé par le fait que** le procédé comprend en outre les étapes consistant à :
vi) chauffer encore ledit film, après l'étape v) ; et
vii) forcer encore ledit film dans la même direction que ledit forçage initial, après l'étape vi).

2. - Procédé selon la revendication 1, comprenant en outre la répétition de l'étape vi) et facultativement de l'étape vii).

3. - Procédé selon l'une des revendications 1 ou 2, dans lequel ladite déformation est réalisée par une pression de gaz initiale ou un vide initial.

4. - Procédé selon l'une quelconque des revendications 1 à 3, dans lequel ladite déformation comprend la déformation dudit film en une forme bombée et ledit forçage initial comprend l'inversion de ladite forme bombée.

5. - Procédé selon l'une quelconque des revendications précédentes, dans lequel ladite pression de gaz et/ou ladite pression de gaz initiale est une pression d'air.

6. - Procédé selon l'une quelconque des revendications précédentes, dans lequel ladite barquette est formée à partir d'une ébauche (10) comprenant des languettes superposables.

7. - Procédé selon l'une quelconque des revendications précédentes, dans lequel le procédé comprend en outre l'étape consistant à disposer une plaque ou bougie chauffante qui peut être d'une forme similaire ou identique au renfoncement.

8. - Procédé selon la revendication 7, dans lequel la plaque ou bougie chauffante est chauffée pour réaliser l'étape de chauffage.

9. - Procédé selon l'une quelconque des revendications précédentes, dans lequel la barquette est supportée dans un support femelle (40) et le support femelle et la plaque chauffante sont approchés l'un de l'autre avant l'étape consistant à forcer ledit film à venir en contact avec la surface interne.

10. - Procédé selon l'une quelconque des revendications précédentes, dans lequel ledit film a une épaisseur de 30 à 450 microns, et de préférence de 30 à 150 microns, et de façon davantage préférée de 30 à 100 microns.

11. - Procédé selon l'une quelconque des revendications précédentes, dans lequel ledit vide est créé entre ladite surface interne et la surface du film la plus proche de ladite surface interne.

12. - Emballage alimentaire (31) comprenant une barquette en carton préformée ayant un renfoncement (34) destiné à contenir un produit alimentaire et une couche de matière plastique (50) adhérant à une surface interne de la barquette en carton, pour former une surface de qualité alimentaire, la couche (50) étant formée à partir d'une feuille de matière plastique chauffée jusqu'à au moins une température qui permet la déformation de la feuille dans une mesure suffisante pour permettre à la feuille de suivre la forme de la surface interne de la barquette et pour permettre une liaison entre ladite surface interne et ladite feuille, et ladite feuille et ladite surface interne étant amenées en contact pour provoquer la liaison de la feuille à ladite surface interne, la couche de matière plastique en feuille étant initialement déformée dans une direction à l'opposée de ladite surface interne de ladite barquette avant ledit contact, l'emballage étant **caractérisé par le fait que** la feuille est à nouveau chauffée et encore forcée en contact avec la barquette après ledit chauffage.

13. - Emballage alimentaire selon la revendication 12, dans lequel ladite couche de matière plastique a une dimension périphérique supérieure à la barquette, et la matière plastique en excès est coupée aux dimensions approximatives de la barquette à la suite de ladite liaison.

14. - Emballage alimentaire selon l'une quelconque des revendications 12 à 13, dans lequel la couche de matière plastique est une matière de polyéthylène, de polyester, PET ou autre matière thermoplastique, ou une matière bioplastique, telle qu'une matière plastique à base d'huile végétale ou d'amidon.

15. - Emballage alimentaire selon l'une quelconque des revendications 12 à 14, comprenant en outre un couvercle formé sur la barquette et scellé hermétiquement à celle-ci, comprenant facultativement un gaz remplaçant l'air, introduit dans un espace formé par l'emballage et ledit couvercle, avant ledit scellement.
